# EUROPEAN PATENT APPLICATION

(11) **EP 4 471 238 A1**
(43) Date of publication of application: **04.12.2024**
(21) Application number: 23746530.7
(22) Date of filing: 24.01.2023
(51) Int. Cl.: E05B 1/00, E05B 47/00, H02K 7/18, E05B 47/06, E05C 1/06

(54) **ACCESS CONTROL SYSTEM**

(30) Priority: 28.01.2022 ES 202230066
(71) Applicant: Ojmar, S.A., 20870 Elgoibar- Guipúzcoa (ES)
(72) Inventor: ZABALA ZABALETA, Jon, 20870 Elgoibar Guipúzcoa (ES); AGUIRREZABALA OLASAGASTI, Jokin, 20870 Elgoibar Guipúzcoa (ES); SOLOZABAL IBARRA, Mikel, 20870 Elgoibar Guipúzcoa (ES)
(74) Representative: Ungria López, Javier
(86) International application number: PCT/ES2023/070035
(87) International publication number: WO 2023/144433

(57) **Abstract**

The present invention relates to an access control system comprising a control circuit (7), a push button (4) movable from a distal position to a proximal position, assisted by an elastic element (4.d) to keep it in the distal opening position, a tab (3), configured to be moved by means of the push button (4), and establish the closure of the access, a locking device (5) for locking the closing position of the tab (3), an access identification element that communicates with the control circuit (7) that locks the closing position of the tab (3) when the control circuit (7) identifies the access element, characterised in that it comprises a rotating element that rotates when the push button (4) is actuated, a clutch mechanism (6.c) that transmits the rotation movement of the rotating element to an energy generating motor (6.a) to power the control circuit (7) when the push button (4) is actuated, avoiding the use of batteries.

## Description

### Object of the invention

The present invention relates to an access control system, the configuration and design of which allows the operation thereof without the need to use batteries.

The invention is applicable to any access system the opening/closing of which is carried out by manual actuation by a user and through the simultaneous use of an access identification element ("key"), such as in the case of access to lockers.

### Background of the invention

Currently, wireless mechatronic access control systems comprise a manually operated lock, which also requires the simultaneous use of an access identification element to open/close a lock. These systems require battery power for the electronics thereof and actuators (motor/solenoid) of the lock to work.

This causes the following problems:
- The batteries must be changed when they run out, incurring a cost derived from the time required to change the batteries of each lock, as well as the added cost of using new batteries.
- They have an environmental impact, since the components used in the manufacture of batteries are toxic (Mercury, Zinc, Cadmium, Nickel, Lead, etc.), both for the environment and for health.
- Discarded batteries must be recycled and treated in facilities specifically dedicated to this, which also entails an additional cost.

The closest prior art to the invention is the Spanish patent document with application number P200702794, which describes a programmable electronic closing lock, governed by a control circuit and which is equipped with a manually actuated, movable knob overcoming the action of a spring, such that its movement causes the forward movement of a tab to establish the closure of the lock, the closing position of which is maintained by a locking device for locking the push button in the closing position, all this provided that verification of an access identification element (key) is performed, using the control circuit, by bringing said identification element closer to the knob, such that when the identification element has not been validated, the control circuit does not activate the locking device, returning the knob to its initial position by the action of the spring. To open the lock, the access identification element must be validated, which causes the unlocking of the closed position of the knob, causing the lock to be opened by the action of said spring that assists the knob. Now, this lock presents the problem that was previously indicated, that is, the need for a battery to activate the different electronic and mechanical elements of the lock.

### Description of the invention

To achieve the objectives and solve the problems mentioned above, the invention, similarly to the access control systems of the state of the art, comprises a push button that can be moved from a distal position to a proximal position, which is assisted by an elastic element, for example a push button spring, to keep it in the distal position.

Furthermore, the system is equipped with a tab, configured to be moved by means of the push button, so that it enables the closure of the access system to be established.

Another component of the system is a locking device for locking the closing position of the tab, and an access identification element that communicates with a control circuit to lock/unlock the closing position of the tab when the control circuit validates the access element.

The main novelty of the invention is that the access control system of the present invention comprises an energy generating system that is equipped with a rotating element, a clutch mechanism and an energy generating motor, so that the rotating element is connected with the energy generating motor through the clutch mechanism, which is configured to transmit the rotating movement of the rotating element to the energy generating motor, when the push button is actuated from the distal position to the proximal position, powering the energy generating system, during this movement, to the control circuit.

The configuration described has the great advantage that it does not require the use of batteries to power the control circuit, such that all the problems that were described in the previous section of the background of the invention are avoided.

In the preferred embodiment of the invention, the locking of the tab in the closed position is carried out by means of a locking shaft, provided in the locking device, which is inserted into a housing provided in the tab, when the push button has been pressed and the access identification element has been validated.

If the access identification element is not validated, the tab does not lock in the closed position and returns to its initial opening position.

It is intended that the push button is equipped with ramp guides that are arranged on axes of the tab, such that guided movement of the tab is possible when the push button is actuated.

The return of the push button to the distal position is caused by the action of the push button spring, when the action of the push button is stopped, so whenever the push button is not being pressed, it remains in the distal position thereof regardless of whether the access is closed or open.

Once the tab is locked in the closed position, to open it, the push button must be pressed again, generating again the energy that powers the control circuit such that the access element is validated.

If the access identification element is valid, the locking shaft retracts, releasing the tab, such that the access opens.

If the access identification element is not valid, the tab remains locked in the closed position, such that the access remains closed.

This configuration determines that whenever the push button is pressed, the motor generates energy, either to open or close the access.

The tab is assisted by a tab return spring that maintains it in the opening position and opposes its movement to the closing position, such that when the push button is pressed to close the access the force of action of the tab return spring must be overcome. This structure determines that the tab moves to the opening position once it has been unlocked.

In one embodiment of the invention, the clutch mechanism comprises a body, which is integral with the rotating element, and in which there is retained in an articulated manner at least one ratchet arm that rests, due to the action of a push element, on ratchet teeth provided in the dintorno of a ratchet disc that is coupled to the shaft of the motor to enable the rotation of the motor when the push button is actuated from its distal position to its proximal position and to prevent its rotation when the push button returns to the distal position.

In another embodiment of the invention, the clutch mechanism is simplified, with the body being integral with the rotating, but in this case it has been configured to retain a push element provided with at least one flexible arm that rests on the ratchet teeth of the dintorno of the ratchet disc, which is coupled to the shaft of the energy generating motor to, as in the previous case, enable the rotation of the motor when the push button is actuated from its distal position to its proximal position and to prevent its rotation when the push button returns to the distal position.

In another simplified embodiment, the body of the preceding embodiments is eliminated, for which the push element, provided with the at least one flexible arm, is arranged directly integral with the rotating element, such that said flexible arm also rests on the ratchet teeth of the dintorno of the ratchet disc to perform the aforementioned functionality consisting of allowing the rotation of the motor when the push button is actuated from its distal position to its proximal position and preventing its rotation when the push button returns to the distal position.

The rotating element is a pinion that meshes in a rack provided in the push button, which facilitates its angular displacement when the push button is pressed.

The electric power generator produces more energy than the control circuit consumes, both to close and open the access system, which allows the control circuit to be configured to perform other types of actions, such as saving the events that take place in a memory, along with the status of the closed or open access, activating an audible device, and/or activating a lighting device. The sound and lighting devices are activated to signal to the user the different actions carried out in the system.

In the event that a failure could occur in the system, the inclusion of a mechanism for manual emergency opening of the position of the locked tab has been intended. To this end, this mechanism is equipped with a lever the actuation of which causes the displacement of the locking shaft provided in the locking device, exiting the housing of the tab, which determines that the tab moves to the opening position by the action of its return spring.

The emergency manual opening mechanism is arranged inside the push button, such that it has been configured to be able to break same at the upper portion thereof, and allow access to said emergency manual opening mechanism, causing the movement of the lever that contacts a stop provided on the locking shaft when performing the emergency opening.

It is intended that maintenance tasks can be carried out on the system, such as updating its firmware, reading all the events that have taken place, etc., which are functions that require more energy than what the electric power generator produces, such that the control circuit has been provided with an external power device by means of electrical contacts. With the external power connected, a maintenance device can be used to perform the tasks of reading events, configuration and firmware updates and also allows power to be provided to the control circuit in the event that an emergency opening is required.

### Description of the figures

To complete the description, and for the purpose of helping to make the features of the invention more readily understandable, this description is accompanied by a set of figures constituting an integral part of the same, which by way of illustration and not limitation represents the following:

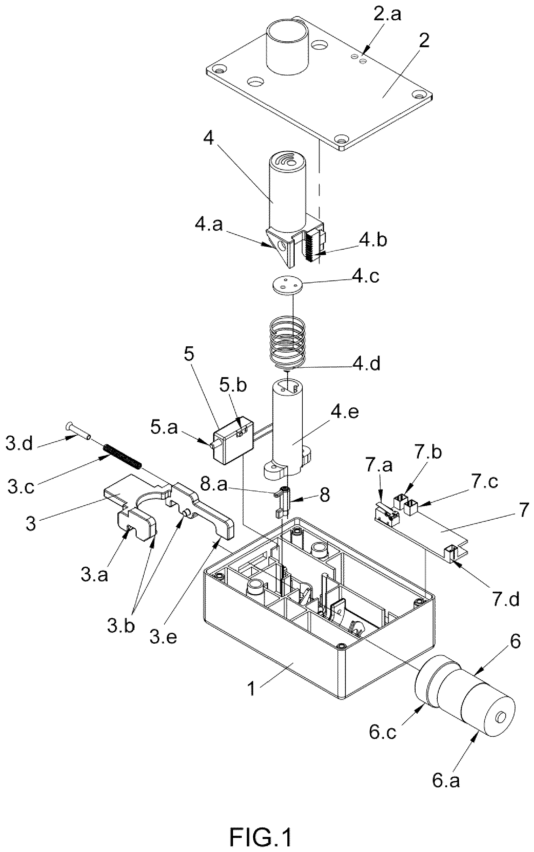

Figure 1 shows an exploded view of an exemplary embodiment of the access system of the invention.
Figure 2 shows a view of the arrangement of the elements of the system with all the elements mounted and without the cover.
Figure 3 shows an exploded view of the configuration of the clutch mechanism and its connection to the energy generating motor.
Figure 4 shows a view of the system in the open position, in which the push button is in its distal, highest position, and the tab is hidden in the case.
Figure 5 shows a view of the system in the position in which the push button is pressed, when a force "F" is exerted, which is a position in which said push button is in its proximal, lowest position, and the tab is protruding from the case.
Figure 6 shows a view of the system in the closed position, in which the push button is in its highest position and the tab is protruding from the case and is locked by the locking shaft.

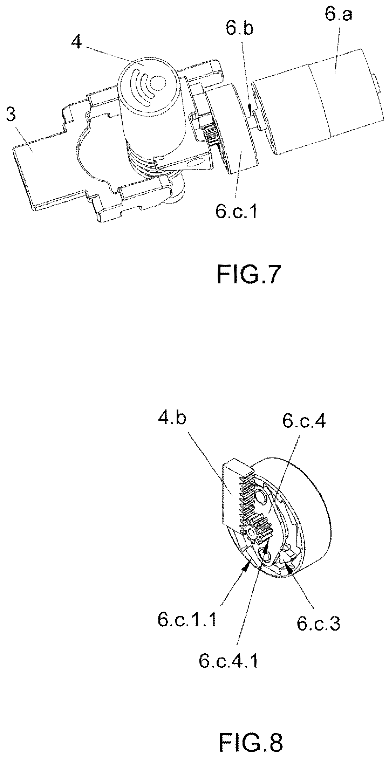

Figure 7 shows a top perspective in which the clutch of Figure 3, the energy generating motor, the tab and the push button have been represented.
Figure 8 shows a perspective detailed view of the arrangement of the pinion of the clutch of Figure 3 in the rack of the push button.
Figure 9 shows a detailed view of the arrangement of the ratchet arms of the clutch mechanism of Figure 3, when the push button is lowered, a position in which said arms engage with the ratchet teeth to rotate the energy generator.
Figure 10 shows a detailed view of the arrangement of the ratchet arms of the clutch mechanism of Figure 3 when the push button rises, a position in which the ratchet arms do not engage with the ratchet teeth, which prevents the rotation of the energy generator.
Figures 11 and 12 show the relative position of the tab in relation to the control circuit, in the open and closed positions respectively, which are positions that are detected by said control circuit through a sensor.

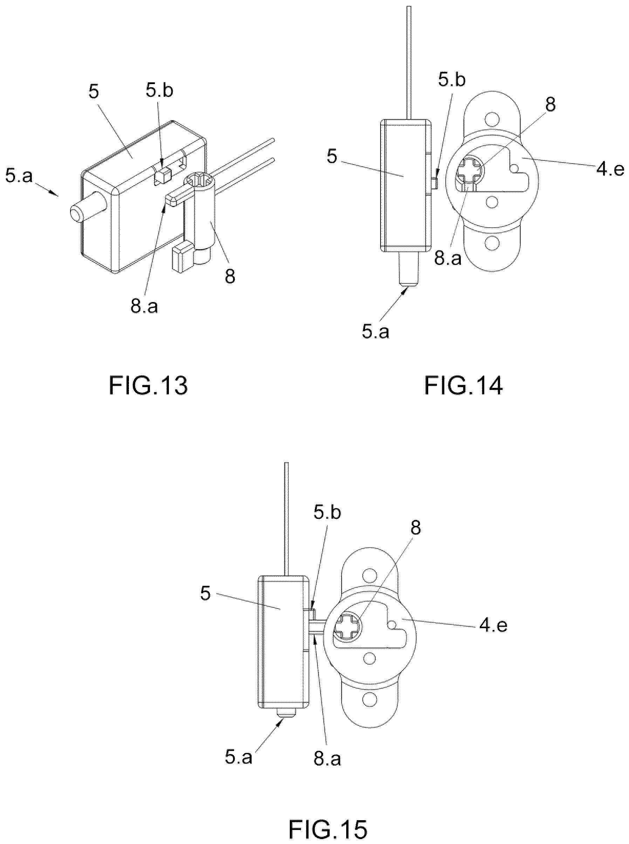

Figures 13 to 15 show the actuation sequence of the emergency manual opening mechanism.
Figure 16 shows different views of a second embodiment of the configuration of the clutch mechanism.
Figure 17 shows different views of a third embodiment of the configuration of the clutch mechanism.

### Preferred embodiment of the invention

The system of the invention comprises the following elements:
1. Case
2. Cover
2.a. Electrical contacts
3. Tab
3.a. Housing
3.b. Tab shafts
3.c. Tab return spring
3.d. Tab return spring guide
3.e. Tab stop
4. Push button
4.a. Ramp-Guides
4.b. Rack
4.c. Antenna
4.d. Elastic element (push button spring)
4.e. Push button guide
5. Locking device
5.a. Locking shaft
5.b. Stop
6. Electric energy generator
6.a. Energy generating motor
6.b. Shaft of the motor
6.c. Clutch mechanism
6.c.1. Ratchet disc
6.c.1.1. Ratchet teeth
6.c.2. Push element
6.c.2.2. Flexible arms of the push element
6.c.3. Ratchet arms
6.c.4. Body
6.c.4.1. Pinion (rotating element)
7. Control circuit
7.a. Sensor (Switch)
7.b. Energy generating connection
7.c. Mechanical locking connection
7.d. Antenna connection
8. Emergency manual actuation mechanism
8.a. Lever

The configuration and design of the access control system of the invention allows its operation without the need to use power batteries for the control circuit that the system includes, thereby solving the existing problems of the state of the art.

To do this, the necessary energy required to power the control circuit is obtained by transforming the mechanical energy, which the user must apply when acting on the system, into electrical energy, since to open or close the system, the user has to apply a movement thereto.

The transformation of mechanical energy into electrical energy is achieved due to the use of an electrical energy generator (6), which comprises an energy generating motor (6.a) that is not described in greater detail because it is not the object of the invention.

The energy produced is not stored, as is done in other energy generation systems, but is used instantly from the moment its production begins, applying the method described in patent application P202131190.

A force F is applied to the push button (4), which causes its rectilinear movement from a distal position to a proximal position, which, in turn, establishes the movement of the tab (3) due to the action of the push carried out by ramp-guides (4.a), located on both sides of the body of the push button (4), on tab shafts (3.b). This configuration keeps, during pressing, the tab (3) attached to the push button (4) at the same time that it allows the tab (3) to move transversely in relation to the pressing movement made on the push button (4).

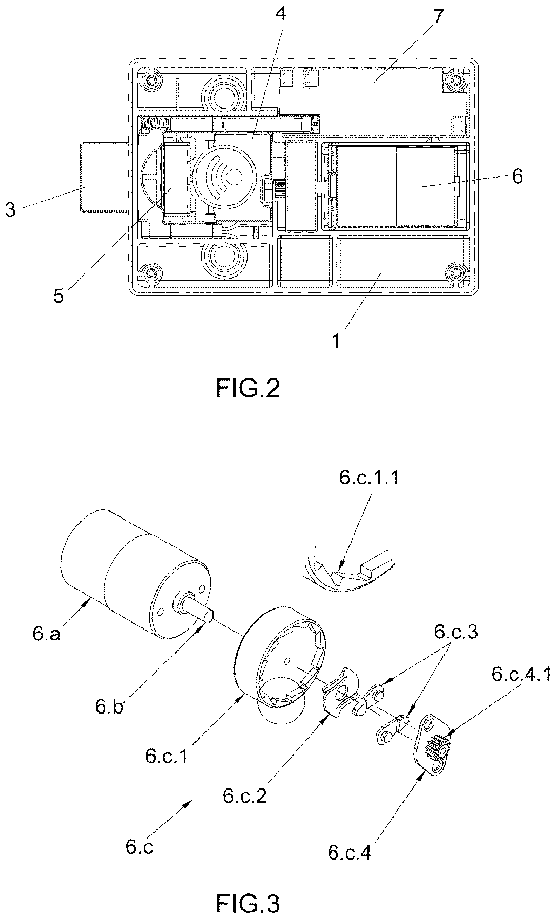

When the push button (4) is pressed, the rectilinear movement it performs is transformed into a circular movement by means of a rotating element, which is made up of a pinion (6.c.4.1) that forms part of the energy generator (6) and that meshes in a rack (4.b) that forms part of the push button (4). The pinion (6.c.4.1) is securely attached to a body (6.c.4) (figure 3), which causes said body (6.c.4) to also rotate when the pinion (6.c.4.1) rotates. In turn, ratchet arms (6.c.3) are retained in the body (6.c.4), with the possibility of rotation, which due to the action of a push element (6.c.2), rest on ratchet teeth (6.c.1.1), provided on the dintorno of a ratchet disc (6.c.1), which is coupled to the shaft (6.b) of the energy generating motor (6.a), this assembly forming a clutch mechanism (6.c) of the electric energy generator (6) that transmits the circular movement to the energy generating motor (6.a) when the push button (4) is pressed.

The energy generating motor (6.a) is equipped with a multiplier gearbox, as is known in the state of the art to provide greater production of electrical energy.

Furthermore, the energy generating motor (6.a) is connected to a control circuit (7) to provide it with electrical power when it rotates.

The ratchet arms (6.c.3) only mesh with the ratchet teeth (6.c.1.1) during the pressing movement of the push button (4), for which said teeth (6.c.1.1) have a sawtooth configuration.

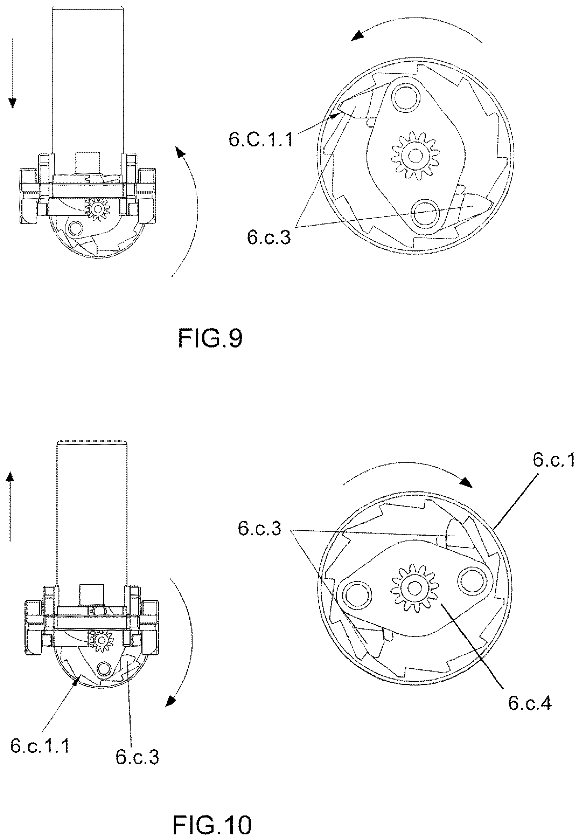

Figure 9 shows how the ratchet arms (6.c.3) engage with the ratchet teeth (6.c. 1.1), thereby achieving the rotation of the disc (6.c. 1).

The push button (4) is provided with a guide (4.e) on which it is arranged and is assisted by an elastic element (4d), for example a push button spring that causes the movement opposite to that of pressing to recover its initial position when pressing is stopped, which determines that the rack (4.b) rotates the body (6.c.4) in the opposite direction to that of pressing, a situation in which the arms (6.c.3) do not engage with the ratchet teeth (6.c.1.1) due to their sawtooth configuration, causing the ratchet disc (6.c.1) not to rotate, such that no energy is generated during this movement.

Figure 10 shows how the ratchet arms (6.c.3) do not engage with the ratchet teeth (6.c.1.1), and therefore do not exert any push on them, such that the ratchet disc (6.c.1) does not rotate (the rotation arrow refers to the rotation of the body (6.c.4) and therefore of the ratchet arms (6.c.3), but the disc (6.c. 1) does not move).

The operation of the energy generating motor (6.a) is not the usual operation of a motor, that is, an electric current is applied to motors such that the output shaft rotates at certain revolutions, in this case, the reverse operation is caused, that is, the shaft of the motor (6.b) is rotated mechanically at certain revolutions in order to obtain a sufficient amount of electrical output energy to power the control electronics.

Furthermore, to open or close the system, an access identification element (not shown) must be used that performs key functions, which must be located close to the system, for which the push button (4) is equipped with an antenna (4.c) through which it communicates with the control circuit (7). In case of invalid/valid reading of the key, the mechatronics is responsible for locking/unlocking the movement of the tab (3), which allows the energy required by the system to be considerably reduced.

At the moment the user presses the push button (4), the control circuit (7) detects that energy is being generated and begins the key authentication process.

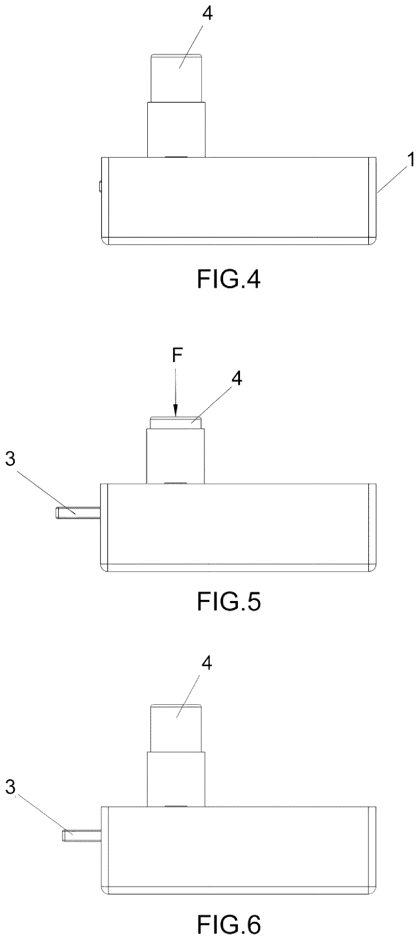

The tab (3) is assisted by a tab return spring (3.c), arranged on a tab return spring guide (3.d), which keeps it in the open position, that is, inside of the case (1), such that if the access control system is initially in the opening position (that is, the system is open, as shown in figure 4) when the push button (4) is pressed the tab (3) comes out of the case (1) and if the authentication is correct, the tab (3) is locked in the closing position, outside the case (1), and if the authentication is not correct the tab (3) is not locked and is reintroduced inside the case (1), due to the action of the spring (3.c) when the push button (4) is no longer pushed.

When the access control system is initially in the closing position (that is, the system is closed and the tab (3) is located outside the case (1) and locked, as shown in figure 5) and the push button (4) is pressed, the control circuit (7) is powered and if the authentication is correct, the tab (3) is unlocked and, due to the action of the tab return spring (3.c), it returns to its open position. On the other hand, if the authentication is not correct, the tab (3) remains locked in its closing position.

The system comprises a locking device (5) that is provided with a locking shaft (5.a) for locking the position of the tab (3) in the closing position. The locking device (5) is governed by the control circuit (7), such that in order to lock the tab (3), said shaft (5.a) is actuated to enter a housing (3.a) provided on the tab (3).

To unlock the tab (3), the locking shaft (5.a) is retracted, such that it comes out of the housing (3.a) of the tab (3). At that moment, due to the action of the tab return spring (3.c), the tab (3) moves back until it is inserted inside the case (1).

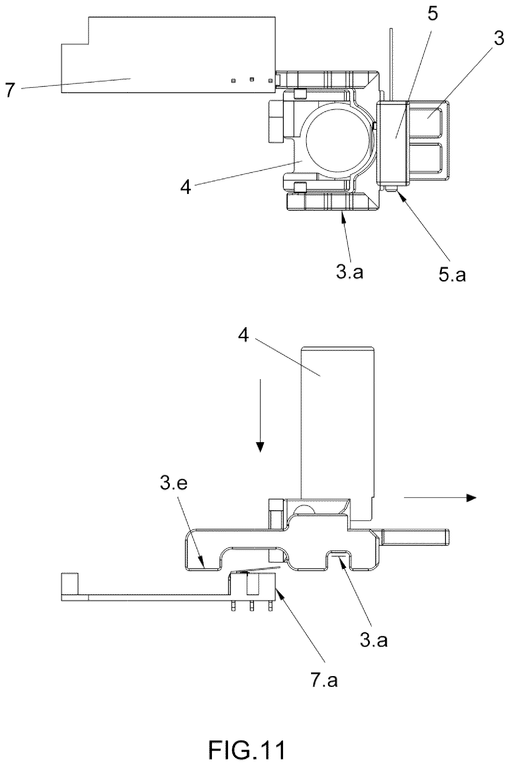

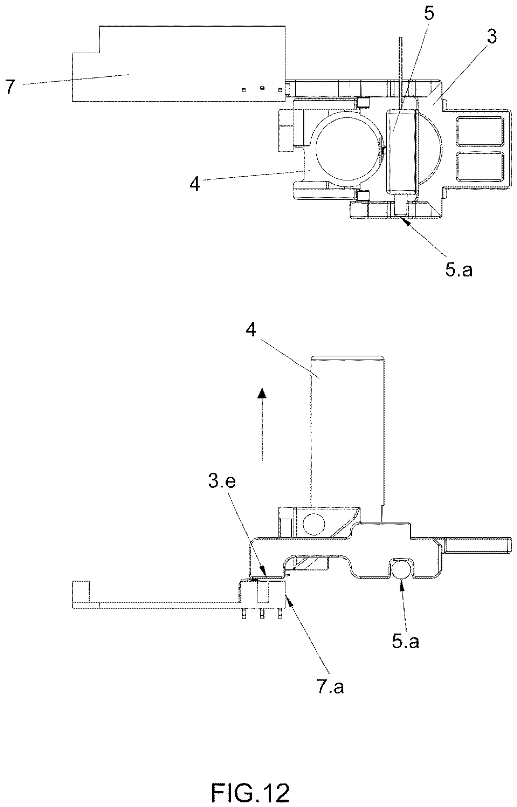

Locking and unlocking only occur when the push button (4) reaches the end of its path, to do so the tab (3) comprises a tab stop (3.e) at the end of the path of which it acts on a sensor (7.a ) of the control circuit (7), detecting when the tab (3) has reached the end of its path (figures 11 and 12). In this way, the control circuit (7) knows when the tab (3) is in the closing or opening position, indicating that the closing or opening has been carried out correctly, and detecting whether the locking or unlocking has occurred correctly.

The energy generating motor (6.a) produces a greater amount of energy than that required to perform the closing/opening operations, such that the remaining energy produced is used by the control circuit (7) to perform other actions of such as:
- Save the latest events and the closed or open status in the memory thereof.
- Provide an audible and/or light feedback signal to signal the different actions carried out in the system.

Furthermore, in the event of a failure in the access control system, the possibility of performing an emergency opening has been provided by means of an emergency manual actuation mechanism (8), provided inside the push button (4) and which comprises a lever (8.a).

To do this, the push button (4) is configured such that it can be cut, and after removing the antenna (4.c) it is possible to insert a screwdriver which provides access to the emergency manual operation mechanism (8) that is positioned inside of the guide of the push button (4.e), and in correspondence with the locking device (5), such that the lever (8.a) is rotated by means of the screwdriver, which activates a stop (5.b) provided on the locking shaft (5.a) causing it to return, thus releasing the tab (3). The tab (3) automatically returns to its open position, being inserted in the case (1), by means of the action of the spring (3.c).

For maintenance tasks such as updating the firmware of the access control system, reading all the events of the access control system, etc., more energy is required than that produced by pressing the push button (4) to perform the opening and closing operations.

Therefore, the access control system includes an external power system by means of electrical contacts (2.a). With the external power connected, a maintenance device can be used to perform the tasks of reading events, configuration and firmware updates and providing power to the control circuit (7) to perform an emergency opening.

The configuration described provides a mechatronic design that ensures an acceptable pressing force for the user and, in turn, a particularly fast operation time at both a mechanical and electronic level.

Since the mechanical energy generated by each user depends on their own strength and changes depending on the user, it is essential to design the mechatronic part to operate with the lowest possible movement speed for users with low strength.

It is also necessary to take into account the minimum time of mechanical movement necessary to complete the operation, since users with greater strength will perform the action in less time.

The design of the system of the invention described provides very low consumption and a very fast operation time (experimentally it has been proven to be less than 0.5s).

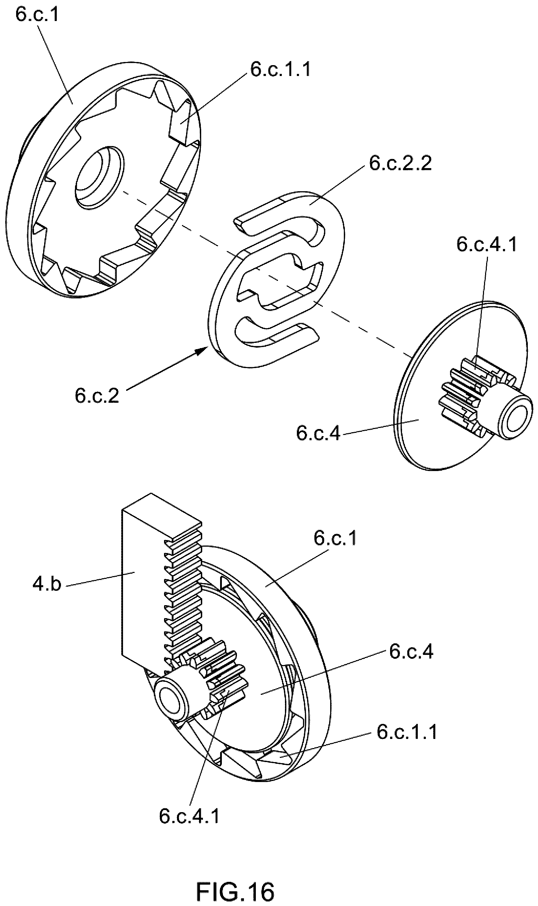

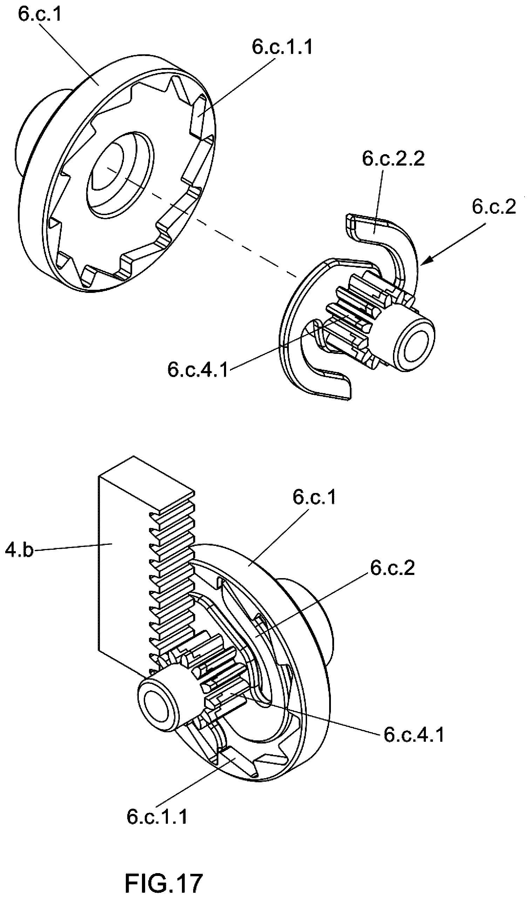

Figures 16 and 17 show two possible simplified embodiments of the clutch mechanism, which avoid the use of the ratchet arms (6.c.3), described above.

To do this, the pinion (6.c.4.1) of the mechanism of figure 16 is also integral with a body (6.c.4), but in this case said body (6.c.4) has been configured to retain a push element (6.c.2) that is equipped with flexible arms (6.c.2.2), which rest directly on the ratchet teeth (6.c.1.1) of the dintorno of the ratchet disc (6. c.1), such that the ends of the flexible arms engage with the ratchet teeth (6.c.1.1) when the push button (4) is pressed, which determines that the pinion (6.c.4.1) transmits circular movement to the energy generating motor (6.a). On the contrary, during the movement in which the push-button (4) recovers its distal position, the body (6.c.4) rotates in the opposite direction to that of pressing, a situation in which the flexible arms (6.c.2.2) slide over the ratchet teeth (6.c.1.1) without engaging on them, due to their sawtooth configuration, causing the ratchet disc (6.c.1) not to rotate, such that no energy is generated during this movement.

Figure 17 shows another embodiment of the clutch mechanism in which the body (6.c.4) has been eliminated, such that the push element (6.c.2) with the flexible arms (6.c.2.2), is fixed directly to the pinion (6.c.4.1), providing the same operation as that described for figure 16.

## Claims

1. An access control system, comprising:
- a control circuit (7),
- a push button (4) movable from a distal position to a proximal position, which is assisted by an elastic element (4.d) to keep it in the distal opening position of the system,
- a tab (3), configured to be moved by means of the push button (4), and establish the closure of the access,
- a locking device (5) for locking the closing position of the tab (3),
- an access identification element that communicates with the control circuit (7) to lock/unlock the closing position of the tab (3) when the control circuit (7) identifies the access element,
**characterised in that** it further comprises an energy generator (6), which is equipped with:
- a rotating element configured to rotate when the push button (4) is actuated,
- a clutch mechanism (6.c) configured to transmit the rotation movement of the rotating element to
- an energy generating motor (6.a) to power the control circuit (7) when the push button (4) is actuated from the distal position to the proximal position.

2. The system, according to claim 1, wherein the tab (3) comprises a housing (3.a) of a locking shaft (5.a) provided in the locking device (5) for locking the tab (3) in the closing position.

3. The system, according to claim 2, wherein the tab (3) is assisted by a tab return spring (3.c) that keeps the tab (3) in the opening position and opposes its movement to the closing position.

4. The system, according to claim 1, wherein the push button (4) comprises ramp-guides (4.a) arranged on tab shafts (3.b) to allow the guided movement of the tab (3).

5. The system, according to claim 1, wherein the clutch mechanism (6.c) comprises a body (6.c.4), which is integral with the rotating element, and wherein at least one ratchet arm is articulately retained (6.c.3) that rests, due to the action of a push element (6.c.2), on ratchet teeth (6.c.1.1) provided in the dintorno of a ratchet disc (6.c.1) that is coupled to a shaft (6.b) of the energy generating motor (6.a) to enable the rotation of the motor (6.a) when the push button (4) is actuated from its distal position to its proximal position and prevent its rotation when the push button (4) returns to the distal position.

6. The system, according to claim 1, wherein the clutch mechanism (6.c) comprises a body (6.c.4), which is integral with the rotating element, and wherein a push element (6.c.2) is retained that is equipped with at least one flexible arm (6.c.2.2) that rests on ratchet teeth (6.c.1.1) provided on the dintorno of a ratchet disc (6.c.1) that is coupled to a shaft (6.b) of the energy generating motor (6.a) to enable the rotation of the motor (6.a) when the push button (4) is actuated from its distal position to its proximal position and prevent its rotation when the push button (4) returns to the distal position.

7. The system, according to claim 1, wherein the clutch mechanism (6.c) comprises a push element (6.c.2), which is integral with the rotating element, and which is equipped with at least one flexible arm (6.c.2.2) that rests on ratchet teeth (6.c.1.1) provided on the dintorno of a ratchet disc (6.c.1) that is coupled to a shaft (6.b) of the energy generating motor (6.a) to enable the rotation of the motor (6.a) when the push button (4) is actuated from its distal position to its proximal position and prevent its rotation when the push button (4) returns to the distal position.

8. The system, according to claims 1 or 5, wherein the rotating element is a pinion (6.c.4.1) that meshes in a rack (4.b) provided in the push button (4).

9. The system, according to claim 1, wherein the control circuit (7) is configured to perform selected actions between saving the events that have taken place in a memory, along with the status of the closed or open access; activating an audible device; activating a lighting device and a combination thereof.

10. The system, according to claim 2, comprising an emergency manual actuation mechanism (8) of the locked closed position of the tab (3), which is equipped with a lever (8.a) the actuation of which causes the movement of the locking shaft (5.a) of the locking device (5).

11. The system, according to claim 8, wherein the push button (4) is configured to allow it to be broken at the upper portion thereof, allowing access to the lever (8.a) of the emergency manual actuation mechanism (8), and wherein said lever (8.a) contacts a stop (5.b) provided on the locking shaft (5.a) when performing the emergency opening.

12. The system, according to claim 1, wherein the control circuit (7) comprises an external power device by means of electrical contacts (2.a), such that with the external power connected a maintenance device can be used to perform tasks of reading events, configuration and firmware updates, and providing power to the control circuit (7) to perform an emergency opening.
